# EUROPEAN PATENT SPECIFICATION

(11) **EP 4 521 012 B1**
(45) Date of publication and mention of the grant of the patent: **04.11.2026**
(21) Application number: 23195601.2
(22) Date of filing: 06.09.2023
(51) Int. Cl.: F16L 23/032, F16L 39/00

(54) **COUPLING FOR DOUBLE-WALLED TUBES**
KUPPLUNG FÜR DOPPELWANDIGE ROHRE
RACCORD POUR TUBES À DOUBLE PAROI

(43) Date of publication of application: 12.03.2025
(73) Proprietor: Airbus Operations GmbH, 21129 Hamburg (DE)
(72) Inventor: Wiegand, Steffen, 21129 Hamburg (DE)
(74) Representative: LKGLOBAL Partnerschaftsgesellschaft mbB

(56) References cited:
- DE-A1- 102018 123 475
- KR-B1- 101 482 981
- NL-A- 8 205 037
- US-A- 3 498 647

## Description

### FIELD OF THE INVENTION

The present invention relates to temperature-resistant tubing connections, more specifically to a double-coaxial tubing system and an aircraft.

### BACKGROUND OF THE INVENTION

Certain energy supply facilities, like for example fuel cell energy systems, may require the transport of cryogenic fuels from a storing tank to a chemical power conversion unit. This may be realized by means of dedicated fuel supply lines that comprise an insulating structure and are interconnected to run between the storing tank and the chemical power conversion unit. However, the temperature of the cryogenic fuels may impose stress on the interconnections of the dedicated fuel supply lines and their insulating structure. This may in a further consequence lead to increased monitoring and maintenance demand.

NL 8 205 037 A relates to a bridge-piece for a pipe section, especially of plastics, containing parallel passages in the walls. It comprises an internal and/or external annular or tubular sleeve fixed to the inside or outside of the pipe section. The sleeve contains a chamber between its wall and that of the pipe sections, which forms a connection between the passages in the sections. At one or both ends this chamber can be sealed by a ring or sleeve between the walls.

KR 101 482 981 B1 relates to a double pipe sealing cap connector, more specifically a double pipe sealing cap in which the water leakage does not flow into the corrugated pipe department of the outside comprising the double pipe to the gap between the piping of the inner side although the water leakage is generated within a distributor box.

US 3 498 647 A relates to a connector assembly having first and second cylindrical rings with mating tapered surfaces, said rings being disposed with a compression nut which threadedly engages with a mating assembly and having locking means for attaching said rings together after one ring telescopes a predetermined distance inside the other ring.

DE 10 2018 123 475 A1 relates to a connecting element for double-walled exhaust pipe sections, wherein two adjacent and interconnected exhaust pipe sections each have an inner pipe and an outer pipe concentrically surrounding the inner pipe, and wherein the connecting element is fixed to at least one outer pipe in a connecting region of the adjacent exhaust pipe sections and arranges at least one inner pipe radially spaced from the surrounding outer pipe, has a sleeve-shaped base body with radially outwardly projecting spacer spring element and with at least one inner pipe locking element projecting in the axial direction. When the connecting element is mounted as intended, the sleeve-shaped base body is arranged concentrically within the outer tube in a connecting area and is fixed to the outer tube via the spacer spring elements. The sleeve-shaped base body surrounds the inner tube and the at least one inner tube locking element engages with a recess or formation of the inner tube in order to fix the inner tube in the axial direction to the connecting element.

### SUMMARY OF THE INVENTION

There may thus be a need to provide for improved interconnections of supply lines suitable for cryogenic fuels.

The object of the present invention is solved by the subject-matter of the independent claims; further embodiments are incorporated in the dependent claims. It should be noted that the following described aspects of the invention apply also for the support, for the coupling, for the double-coaxial conduit, for the double-coaxial tubing system and for the aircraft.

According to the present invention, a double-coaxial tubing system is provided. The double-coaxial tubing system comprises at least two double-coaxial conduits and at least one fastening structure. Each of the at least two double-coaxial conduits comprises a double-coaxial conduit, comprising a double-coaxial tube arrangement with a primary outer tube, a secondary inner tube and at least one coupling. The coupling comprises a primary flange, a secondary flange and a support for coaxial flanges of a double-coaxial coupling is provided. The support comprises a circular support structure. The circular support structure provides a primary mounting zone for attaching a primary flange for connecting a primary outer tube, a secondary mounting zone for attaching a secondary flange for connecting a secondary inner tube coaxial to the primary outer tube. The primary mounting zone and the secondary mounting zone are spaced apart from each other in a radial direction for centering the primary flange and the secondary flange in a radially spaced coaxial manner. The primary mounting zone provides an outer circumferential connection region with at least three mounting points for attaching the primary flange. The secondary mounting zone provides an inner circumferential connection region with at least three mounting points for attaching the secondary flange. A thermal path within the circular support structure between a mounting point of the primary mounting zone and an adjacent spaced apart mounting point of the secondary mounting zone is longer than the distance between the two points. The support rigidly connects the primary flange and the secondary flange and centers the secondary flange and the primary flange in a radially spaced coaxial manner. The primary flange and the secondary flange respectively are each provided with an axially facing flange side for a sealingly-tight coupling connection to a respective counter part. A circumferential portion of one end of the primary outer tube is sealingly attached to a primary flange of the coupling. A circumferential portion of one end of the secondary inner tube is sealingly attached to a secondary flange of the coupling. A circular support structure comprises axially oriented passages between an inner side of the primary outer tube and an outer side of the secondary inner tube. The fastening structure provides a clamping force by pressing adjacent primary flanges of the at least two double-coaxial conduits against each other.

As an effect, thermal transport between the first flange and the second flange is decelerated. As an advantage, the heat gradient between the primary flange and the secondary flange decreases more slowly. As further advantage, thermal stress in the material of the double-coaxial coupling is reduced. As a further advantage, icing or air liquefaction, in cryogenic applications, are avoided. As an advantage, a longer load path of a connection between the primary and the secondary flange provides for more flexibility between the primary and the secondary flange. As a further advantage, a direct structural connection from inner pipe to outer pipe sealing area on the radial plane is avoided. As a result, the monitoring and maintenance demand is decreased.

As an advantage, the reduction of thermal transport between the primary and secondary flanges prevents their temperature-induced deformationl.

As an advantage, the reduction of thermal transport between the primary and secondary flanges prevents a temperature-induced deformation of the primary flange with respect to the secondary flange.

As a further advantage, increasing the time of reaching the temperature equilibrium between inner and outer pipe of the secondary flange and the primary flange respectively might lead to omitting and/or avoiding the use of additional insulation at the flanges.

As a further advantage, the coupling, or double wall pipe flange withstands the stresses induced by a temperature shock of for example 50 K at the inner pipe medium at the primary flange and 300 K outer pipe environment at the secondary flange.

As an advantage, the force applied on the primary flange can be transmitted via the support to the secondary flange and vice versa.

As an advantage, the force applied on the primary flange can be used to sealingly press the secondary flange to an abutting secondary flange.

As an advantage, the double walled pipe flange, i.e., the coupling enables a continuous interspace and in parallel has a relatively low heat transfer from an attached inner pipe to an attached outer pipe or in the opposite direction.

As an advantage, whilst keeping the same basic functions for a double walled pipe flange for a continuous interspace, is that due to a huge temperature gradient, no excessive stresses will occur in the coupling.

As an advantage, thermal transport between the primary outer tube and the secondary inner tube is reduced.

As an advantage, flexibility between the primary outer tube and the secondary inner tube is allowed.

As an advantage, the use of double walled pipe assemblies which are already combined pre-assembled is enables.

As a further advantage, advantages in the manufacturing, in service and spare part handling and/or warehousing of the in the double-coaxial tubing system are provided.

As an advantage, a tubing system is yielded that allows the coaxial flow of two different fluid streams.

As an advantage, a tight and temperature resistant tubing system is yielded.

As an advantage, a stress-resistant tubing system is yielded.

According to an example, the circular support structure is preloadable by a force acting between the mounting point of the primary mounting zone and the mounting point of the secondary mounting zone.

According to an example, the circular support structure comprises a U-shaped profile in its axial cross-section. The U-shaped profile is open to the mounting point of the primary mounting zone and the mounting point of the secondary mounting zone. The U-shaped profile provides for stiffness between the mounting point of the primary mounting zone and the mounting point of the secondary mounting zone in an axial and radial direction.

According to an example, legs of the U-shaped profile comprise sleeve-like structures. An apex of the U-shaped profile comprises a ring-like structure.

According to the present invention, also an aircraft is provided. The aircraft comprises a fluid reservoir storing a fluid, at least one load configured for operating with the fluid and a double-coaxial tubing system of the previous example. The double-coaxial tubing system supplies the fluid from the fluid reservoir to the at least one load.

As an advantage, an aircraft with a hydrogen-leak tight tubing system is yielded.

As a further advantage, a safer aircraft is yielded.

According to an example, provided for better technical understanding, also a method for providing a support for coaxial flanges of a double-coaxial coupling is provided. The method comprises the following steps:
- Providing a circular support structure,
- Providing, at the circular support structure, a primary mounting zone for attaching a primary flange for connecting a primary outer tube,
- Providing, at the circular support structure, a secondary mounting zone for attaching a secondary flange for connecting a secondary inner tube coaxial to the primary outer tube. The primary mounting zone and the secondary mounting zone are spaced apart from each other in a radial direction for centering the primary flange and the secondary flange in a radially spaced coaxial manner. The primary mounting zone provides an outer circumferential connection region with at least three mounting points for attaching the primary flange. The secondary mounting zone provides an inner circumferential connection region with at least three mounting points for attaching the secondary flange. A thermal path within the circular support structure between a mounting point of the primary mounting zone and an adjacent spaced apart mounting point of the secondary mounting zone is longer than the distance between the two points.

According to an aspect, a connection for a tube-in-tube arrangement is provided. The connection is provided to both an inner and outer tube of the tube-in-tube arrangement. The connection comprises two radial joining portions, one for each tube. The connection is attachable to another tube-in-tube arrangement. To slow down thermal exchange in-between the two radial joining portions, their interconnection is provided as an elongated thermal conductor between the two radial joining portions. The thermal pathway is arranged extending away from the radial plane of the flange connection. In that manner, a direct thermal and mechanical contact between the two radial joining portions in their radial plane is avoided. Overall, this reduces mechanical stress at the connection, if the inner and outer tube comprise different temperatures.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 shows a general scheme of a cross section through a primary outer tube comprising an example of a support.
Fig. 2 shows an example of a support.
Fig. 3 schematically shows a cross section through examples of a support, a coupling and a double-coaxial conduit.
Fig. 4 schematically shows an example of a double-coaxial conduit and a double-coaxial tubing system.
Fig. 5 schematically shows an example of an aircraft comprising a double-coaxial tubing system.
Fig. 6 shows basic steps of an example of a method for providing a support for coaxial flanges of a double-coaxial coupling.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

In an example, a double walled pipe flange, i.e., a coupling, for continuous interspaces, continuous shroud, e.g., in shrouded fuel pipes, is provided. The continuous shroud / interspace can be drained in general. Normally the inner pipe flange, i.e., secondary flange, is structurally seen directly connected to the outer pipe flange, i.e., primary flange. Functionally the inner and outer pipe flanges are separated in terms of medium flow. This is enabled by using at least two seals and/or gaskets plus circumferential bore holes or similar between the seals to enable a continuous interspace. This works well when the temperatures in the inner pipe and outer pipe or environment do not differ that much. If there is a huge temperature difference or temperature shock consequently huge stress values will occur in the flange due to the direct structural connection and hence as well the direct heat conduction path.

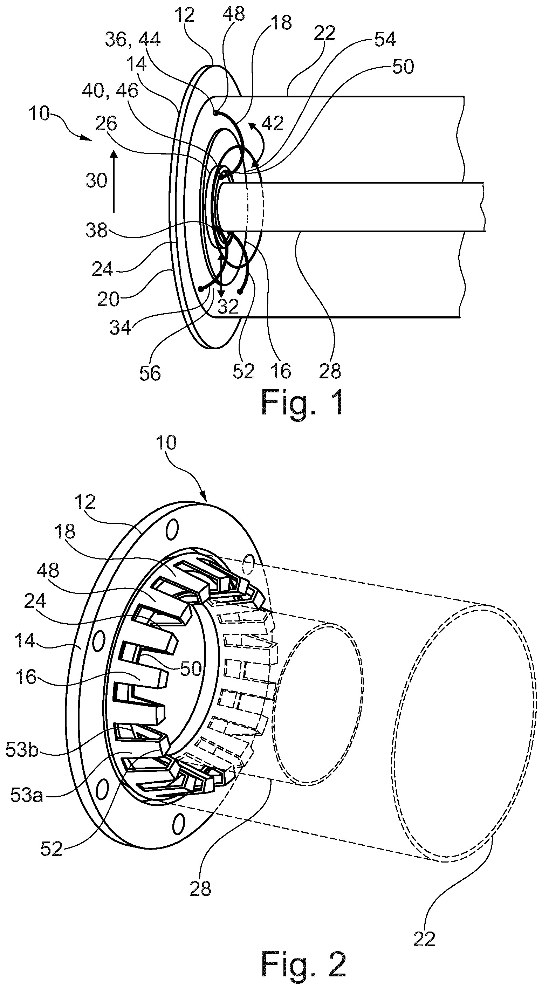

Fig. 1 shows a general scheme of a cross section through a primary outer tube comprising an example of a support. The support 10 for coaxial flanges 12 of a double-coaxial coupling 14 comprises a circular support structure 16. The circular support structure 16 provides a primary mounting zone 18 for attaching a primary flange 20 for connecting a primary outer tube 22 and a secondary mounting zone 24 for attaching a secondary flange 26 for connecting a secondary inner tube 28 coaxial to the primary outer tube 22. The primary mounting zone 18 and the secondary mounting zone 24 are spaced apart from each other in a radial direction, shown by arrow 30 in Fig. 1, for centering the primary flange 20 and the secondary flange 26 in a radially spaced coaxial manner, shown by arrow 32 in Fig. 1. The primary mounting zone 18 provides an outer circumferential connection region 34 with at least three mounting points 36 for attaching the primary flange 20. The secondary mounting zone 24 provides an inner circumferential connection region 38 with at least three mounting points 40 for attaching the secondary flange 26. A thermal path, a shown by arrow 42 in Fig. 1, within the circular support structure 16 between a mounting point 44 of the primary mounting zone 18 and an adjacent spaced apart mounting point 46 of the secondary mounting zone 24 is longer than the distance between the two points.

The support 10 can also be referred to as spacer, spacing device, or joinder, linkage, joining, interface, junction, conjunction or interconnection.

In an example, the support is made by additive manufacturing.

Primary can also be referred to as first, firstly, outer and vice versa.

Secondary can also be referred to as second, secondly, inner and vice versa.

In an example, the support 10 can also be understood as a radial clamp or tweezers, not shown in Fig. 1.

The coaxial flanges 12 can also be referred to as connecting elements or coupling elements.

The term "coaxial" relates to a manner which arranges linear hollow objects along a common direction, where one hollow object encloses the other hollow object, as shown in Fig. 1.

The term "coaxial flange" relates to a smaller flange which is arranged within a larger flange, where both flanges orient at the same vector in space.

In an example, the flanges can deviate from their coaxial arrangement in that they are not equally spaced from each other.

The term "flange" relates to a connecting element at the end portion of a tubing or piping, that can abut to another flange of another tubing, to establish a connection between the tubing and the other tubing.

The term "double-coaxial coupling" relates to the afore mentioned flange arrangement of a smaller flanged enclosed by a larger flange, secondary flange 26 and primary flange 20 in Fig. 1 respectively, where both, the smaller flange and the larger flange, are configured to establish a connection to a smaller flange and a larger flange of another coaxial flange arrangement.

The term "circular support structure" relates to an annular connecting arrangement that is formed to follow the circular end portion of a tube.

The zone can also be referred to as area.

The term "mounting zone" relates to an area that is strong enough to keep flanges and their associates tube segments apart.

The term "primary outer tube" can also be referred to as outer tube or outer tubing.

The term "secondary inner tube" can also be referred to as inner tube or inner tubing.

The term "attaching" relates to a welded connection or a material-locking connection of the mounting zones to the flanges, in Fig. 1.

The term "outer tube" relates to a piping or tubing that is large enough in a radial direction to provide its inner lumen to a smaller piping or tubing.

The term "radial direction", also expressed as "radially", is defined by the radius defining the volume of the inner lumen of the tubing.

In an example, the axial direction, also expressed as "axially" is defined by the length defining the volume of the inner lumen of the tubing, in Fig. 1.

The term "inner tube" relates to a piping or tubing that is small enough to be contained by the outer tube, as shown in Fig. 1.

In an example, the tubes can be elliptically or comprise a cornered shaped profile.

In an example, the tubes are configured to transport gases.

In an example, the tubes are configured to transport cryogenic hydrogen.

The term "spaced apart" relates to the arrangement of the primary mounting zone 18 with respect to the secondary mounting zone 24 at the circular support structure 16 such that they do not contact each other and in the radial direction a distance is provided between the primary mounting zone 18 and the secondary mounting zone 24, as shown in Fig. 1.

In an example, the circular support structure 16 is formed, such that it provides an intermediate annular cavity that separates the primary flange 20 from the secondary flange 26, as shown in Fig. 1.

In an example, the intermediate annular cavity is configured to thermally insulate the second coupling element from the first coupling element.

The term "centering" relates to the function of the circular support structure 16 in aligning the secondary flange 26 in the primary flange 20.

In an example, the center of the secondary flange 26 and the primary flange 20 vary, not shown in Fig. 1.

The term "radially spaced coaxial manner" relates to an arrangement wherein the smaller secondary flange 26 and the larger primary flange 20 comprise the same centre.

The term "mounting points" relates to areas that provide a direct physical connection between the inner circumferential connection region 38 and the outer circumferential connection region 34 to the secondary and primary flange 20, in Fig. 1.

**In** an example, more than at least three mounting points 36, 40 are provided, for example four, five or eight mounting points.

**In** an example, the at least three mounting points 36, 40 are provided to prevent a shifting of the primary flange 20 with respect to the secondary flange 26.

**In** an example, the at least three mounting points 36, 40 are provided as welded, soldered, bonded connections between the outer circumferential connection region 34 and the inner circumferential connection region 38 and the primary and secondary flange 20, 26.

**In** an example, the at least three mounting points 36, 40 are interconnected to yield a single mounting point.

**In** an example, the at least three mounting points 36, 40 are provided by a single welded line.

**In** an example, the at least three mounting points 36, 40 are provided from manufacturing the circular support structure 16 with the primary and secondary flange 20, 26 from a single piece.

**In** an example, the at least three mounting points 36, 40 are provided from manufacturing the circular support structure 16 with the primary and secondary flange 20, 26 from a single piece from casting, CNC machining or additive manufacturing.

**In** an example, the at least three mounting points 36, 40 represent a material-locking connection between the circular support structure 16 with the primary and secondary flange 20, 26.

The term "inner circumferential connection region" relates to an area that is formed to connect to an outer region of the secondary flange 26, that is not part of the inner lumen of the inner tube, as shown Fig. 1.

The term "outer circumferential connection region" relates to an area that is formed to connect to an inner region of the primary flange 20, that is part of the inner lumen of the outer tube, as shown in Fig. 1.

The term "thermal path" relates to the load path, as shown by arrow 42 in Fig. 1, between the mounting point 44 of the primary mounting zone 18 and the adjacent spaced apart mounting point 46 of the secondary mounting zone.

**In** an example, the thermal path of the circular support structure 16 is represented as an elongated connection. The elongated connection acts as the load path to convey the outer applied forces from the primary flange 20 to the inner secondary flange 26.

In an example, the load path within the circular support structure 16 between a mounting point 44 of the primary mounting zone 18 and an adjacent spaced apart mounting point 46 of the secondary mounting zone is longer than the distance between the two points, as also demonstrated by the arrow 42 in Fig. 1

In an example, the circular support structure 16 is made from a thermal insulating material in order to slow down thermal transport between the primary and the secondary flange 20, 26.

In an example, the material of the circular support structure 16 comprises a specific material not prone to hydrogen embrittlement, not shown in Fig. 1.

In an example, the material of the circular support structure 16 comprises a specific austenitic steel not prone to hydrogen embrittlement.

In an example of Fig. 1, the primary mounting zone 18 is provided as a circumferential primary mounting zone 48. The secondary mounting zone 24 is provided as a circumferential secondary mounting zone 50.

In an example, the circumferential mounting zones are provided as circular shaped zones, not shown in Fig. 1.

In another example, the circumferential mounting zones are provided as square shaped zones, not shown in Fig. 1.

In another example, the circumferential mounting zones are provided as oval or elliptic shaped zones, not shown in Fig. 1.

In an option of an example of Fig. 1, the primary mounting zone 18 and the secondary mounting zone 24 are provided by a plurality of at least three brackets 52, each bracket providing a mounting point 44 of the primary mounting zone 18 and a mounting point 46 of the secondary mounting zone 24. A circumferential connector 54 is provided which provides a common mount for the plurality of at least three brackets 52.

The term "bracket" relates to an object with a bend shape, having two limps with end faced connection points.

In an example, more than at least three brackets 52 are provided, for example, four, five or eight brackets.

In an example, the circumferential connector 54 is a wire or a ring-shaped object, as shown in Fig. 1.

In an example, the circumferential connector 54 comprises a heat capacity reservoir.

As an advantage, the plurality of at least three brackets 52 with their thinner material cross-section reduces thermal transport from the primary flange 20 to the secondary flange 26.

As an advantage, the plurality of at least three brackets 52 provides flexibility of the primary flange 20 with respect to the secondary flange 26.

In an example of Fig. 1, for an axially oriented fluid flow, the circular support structure 16 comprises axially oriented passages 56 between the circumferential primary mounting zone 48 and the circumferential secondary mounting zone 50.

In an example, the circumferential primary mounting zone 48 and the circumferential secondary mounting zone 50 are being arranged spaced apart from each other in the radial direction for allowing an axial flow in an annular tube volume provided by the primary outer tube 22 running coaxially to the secondary inner tub.

The annular tube volume can also be referred to as annular volume.

The term "axially oriented passages" relates to channels and/or holes provided at the circular support structure 16 that are able to pass fluids.

The term "fluid" relates to e. g. a liquid or gas, that continuously deforms, i.e., flows, under an applied shear stress or an external force.

As an advantage, a fluid can be channeled between the primary flange 20 and the secondary flange 26, in Fig. 1.

In an example of Fig. 1, the circular support structure 16 is preloadable by a force acting between the mounting point 44 of the primary mounting zone and the mounting point 46 of the secondary mounting zone.

In an example, the mounting point 44 of the primary mounting zone 18 and an adjacent spaced apart mounting point 46 of the secondary mounting zone 24, are the mounting point 44 of the primary mounting zone 18 and the mounting point 46 of the secondary mounting zone 24.

The term "preloadable" relates to a function of the circular support structure 16 in storing potential energy by the elasticity of its material, not shown in Fig. 1.

In an example, the circular support structure 16 acts like a spring.

As an advantage, the primary flange and the secondary flange are elastically connected to escape temperature-induced stress.

Fig. 2 shows an example of a support 10. The primary mounting zone 18 is also provided as a circumferential primary mounting zone 48 and the secondary mounting zone 24 is provided as a circumferential secondary mounting zone 50. The primary mounting zone 18 and the secondary mounting zone 24 are also provided by a plurality of at least three brackets 52, each bracket providing a mounting point 53a of the primary mounting zone 18 and a mounting point 53b of the secondary mounting zone 24. In Fig. 2 there is no circumferential connector 54 provided which provides a common mount for the plurality of at least three brackets 52.

In an example, the at least three brackets 52 comprise a U-shaped profile.

In an example, the at least three brackets 52 comprise a V-shaped profile.

In an example, the at least three brackets 52 comprise a spring like profile.

In an example, the at least three brackets 52 comprise are made from springs.

In an example, the at least three brackets and the support are made from a same single piece.

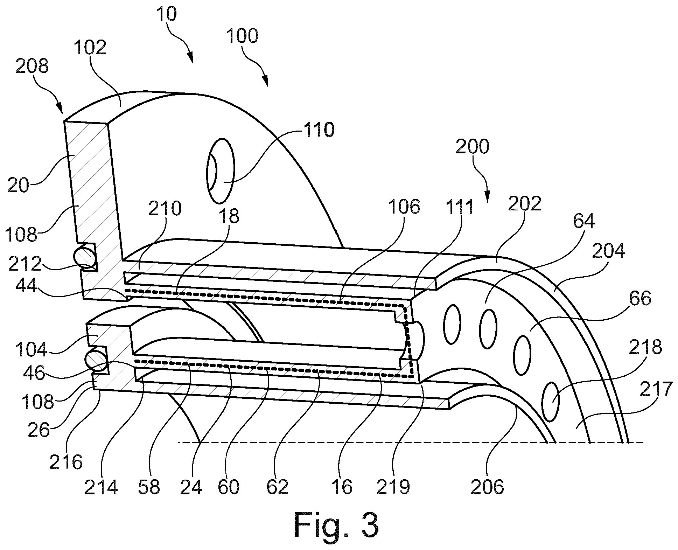

Fig. 3 schematically shows a cross section through an example of a support 10. The circular support structure 16 of the support 10 comprises a U-shaped profile 58 in its axial cross-section. The U-shaped profile 58 is open to the mounting point 44 of the primary mounting zone 18 and the mounting point 46 of the secondary mounting zone 24. The U-shaped profile 58 provides for stiffness between the mounting point 44 of the primary mounting zone 18 and the mounting point 46 of the secondary mounting zone 24 in an axial and radial direction.

In an example, an apex of the U-shaped profile 58 comprises a thermal reservoir for storing heat and slowing down the cooling transfer, not shown in Fig. 3.

The term "U-shaped profile" can be understood as a cup-shaped structure.

In an example, the U-shaped profile 58 encloses an annular cavity, as shown in Fig. 3.

In an example, the U-shaped profile is a V-shaped profile comprising a V-shape with a corner as the apex and straight V-legs.

In an example, the U-shaped profile comprises a mixture in between a U-shape and a V-shape.

In an example, the circular support structure 16 of the support 10 comprises a V-shaped profile 58 in its axial cross-section. The V-shaped profile 58 is open to the mounting point 44 of the primary mounting zone 18 and the mounting point 46 of the secondary mounting zone 24. The V-shaped profile 58 provides for stiffness between the mounting point 44 of the primary mounting zone 18 and the mounting point 46 of the secondary mounting zone 24 in an axial and radial direction.

As an advantage, a force transmission between the mounting point of the primary mounting zone and the mounting point of the secondary mounting zone is improved.

In an example of Fig. 3, legs 60 of the U-shaped profile 58 comprise sleeve-like structures 62. An apex 64 of the U-shaped profile 58 comprises a ring-like structure 66.

In an example, the ring-like structure 66 comprises a thermal reservoir for storing heat and slowing down the cooling transfer.

In an example, the sleeve-like structures 62 and the ring-like structures 66 are made from a single piece.

In an example, the U-shaped profile 58 comprises corners at the transitions from the legs 60 to the apex 64 in order to increase its stiffness, as shown in Fig. 3.

In an example, the ring-like structure 66 comprises axially oriented passages 56 to let a fluid pass, as shown in Fig. 3.

In an example, the sleeves and the ring form a sleeve-ring-sleeve part.

In an example, the load path length is enlarged with the help of the "sleeve-ring-sleeve part" and the direct connection between the primary and the secondary flange 20, 26 is cut, as shown in Fig. 3.

In an example, the long load path acts similar to a spring. It gives enough flexibility in radial direction at the same time it is stiff enough in axial direction to keep the seating load for the seal in order guarantee leak tightness of the secondary flange 26, that will be additionally adjusted with a certain pretension of the "sleeve-ring-sleeve part".

As an advantage, the longer load path in the U-shaped profile enables flexibility in radial direction whilst being relatively stiff in axial direction.

Fig. 3 also schematically shows a cross section through an example of a coupling 100. The coupling 100 comprises a primary flange 102, a secondary flange 104 and a support 106 according to one of the previous examples and options. The support 106 rigidly connects the primary flange 102 and the secondary flange 104 and centers the secondary flange 104 and the primary flange 102 in a radially spaced coaxial manner. The primary flange 102 and the secondary flange 104 respectively are each provided with an axially facing flange side 108 for a sealingly-tight coupling 100 connection to a respective counter part.

The term "respective counter part" relates to an adjoining coupling that abuts to the coupling and/or relates to abutting flanges of end portions of tubes, and/or relates to a matching end portion of another system. For example, the adjoining coupling, the abutting flanges of end portions of tubes and the end portion of another system, not shown in Fig. 3, are configured to provide a sealingly-tight transfer of a fluid via the abutting coupling.

The term "rigidly" relates to the property of the support 106 structure in being preloadable.

The term "sealingly-tight coupling connection" relates to a gas-leak tight connection between the flanges.

In an example, the gas-leak tight connection is configured to reduce diffusion of hydrogen gas in-between the connection to a respective counter part, not shown in Fig. 3.

In an example, the coupling 100 provides a gas-leak tight connection between the primary flange 102 and an adjoining other primary flange and between the secondary flange 104 and an adjoining other secondary flange, not shown in Fig. 3.

In an example, the primary and secondary flange 102, 104 comprise at least one recess having a seal for establishing a sealingly-tight connection to an adjoining primary and secondary flange, not shown in Fig. 3.

In an example of Fig. 3, the axially facing flange side 108 of the primary flange 102 is provided for a sealingly-tight abutment to an axially facing flange side 108 of a primary flange of an adjoining coupling. The axially facing flange side 108 of the secondary flange 104 is provided for a sealingly-tight abutment to an axially facing flange side 108 of a secondary flange of the adjoining coupling.

In an example, the surface of the axially facing flange side 108 is machined in order to provide a sealingly-tight abutment to another axially facing flange side that prevents diffusion of gases, especially hydrogen gas.

As an advantage, the flexible support prevents deformation of the coupling that would prevent a sealingly-tight abutment to an axially facing flange side of a secondary flange of the adjoining coupling.

In an example of Fig. 3, the primary flange 102 comprises at least one fastening area 110 for receiving an axially clamping force of a flange fastening structure for pressing the axially facing flange side 108 of the primary flange 102 to an abutting axially facing primary flange side of the adjoining coupling. A circular support structure 111 is configured to transfer the axially clamping force to the secondary flange 104 for pressing the axially facing flange side 108 of the secondary flange 104 to an abutting axially facing secondary flange side of the adjoining coupling, not shown in Fig. 3.

The term "fastening area" relates to a recess, a hole, a projection a nose, a hook that can be used to hold a fastening structure.

The term "flange fastening structure" relates to an object that is able to transmit a force between two different flanges, such that the two different flanges unite to form a tight connection.

**In** an example, the flange fastening structure is a bolt structure comprising bolt elements and bolt fastening elements, not shown in Fig. 3.

**In** an example, the flange fastening structure is a v-clamp, not shown in Fig. 3.

As an advantage, the reduction of thermal transport between the primary and secondary flange by the support prevents a temperature-induced deformation of the axially facing flange side 108 that would lead to leaking.

As an advantage, not additional mounting procedure or flange fastening structure is required for the secondary flange.

Fig. 3 also schematically shows a cross section through an example of a double-coaxial conduit 200. The double-coaxial conduit 200 comprises a double-coaxial tube arrangement 202 with a primary outer tube 204 and a secondary inner tube 206 and at least one coupling 208 according to one of the previous examples and options. A circumferential portion 210 of one end of the primary outer tube 204 is sealingly attached to a primary flange 212 of the coupling 208. A circumferential portion 214 of one end of the secondary inner tube 206 is sealingly attached to a secondary flange 216 of the coupling 208. A circular support structure 217 comprises axially oriented passages 218 between an inner side of the primary outer tube 204 and an outer side of the secondary inner tube 206.

**In** an example, the primary outer tube 204 encloses an annular lumen 219 in the gap between the outer tube wall of the secondary inner tube 206 and the inner tube wall of the primary outer tube 204. The annular lumen 219 can be used for receiving a fluid or a vacuum.

**In** an example, the annular lumen 219 can be used for receiving an inert gas, not shown in Fig. 3.

**In** an example, the annular lumen 219 is configured to keep a vacuum, not shown in Fig. 3.

**In** an example, the annular lumen 219 is configured to keep an inert gas under a pressure, not shown in Fig. 3.

**In** an example, the annular lumen 219 of the double-coaxial conduit 200 keeps a fluid. Another coupling of another double coaxial conduit is abutting the coupling 208 of the double-coaxial conduit 200, having axially oriented passages 218 between an inner side of the primary outer tube 204 and an outer side of the secondary inner tube 206. Having these axially oriented passages 218 allows a flow of the fluid between the annular lumen 219 of the double-coaxial conduit 200 and the other double-coaxial conduit 200 beyond their coupling in Fig. 3. By means of these axially oriented passages 218 an extended annular lumen 219 is provided.

In an example, the circumferential portion 210 of one end of the primary outer tube 204 and/or the circumferential portion 214 of one end of the secondary inner tube 206 is welded to the primary flange 212, respectively the secondary flange 216 of the coupling 208.

In an example, the circumferential portion 210 of one end of the primary outer tube 204 and/or the circumferential portion 214 of one end of the secondary inner tube 206 is formed as the primary flange 212, respectively the secondary flange 216 of the coupling 208.

In an example, the double-coaxial conduit 200 can be regarded as one pre-assembly for consisting of two double wall pipe flanges and the inner and outer pipe.

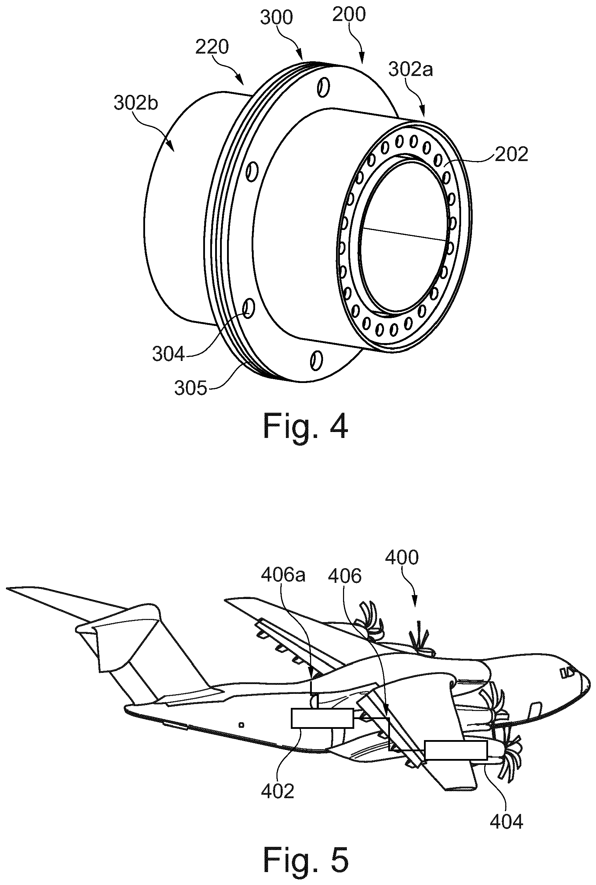

Fig. 4 schematically shows an example of a double-coaxial conduit 200 and a double-coaxial tubing system 300.

In an example of Fig. 4, a second coupling 220, according to the previous examples and options, is provided attached to the other end of the double-coaxial tube arrangement 202 of the double-coaxial conduit 200.

As an advantage, the double-coaxial conduit allows for a flow of a fluid in the annular lumen beyond the flanges into another annular lumen of another double-coaxial conduit abutting the double-coaxial conduit.

As a further advantage, a hydrogen leakage at the primary flange is prevented by a pressurized gas in the annular lumen and the axially oriented passages 218.

As an advantage, a leak-tight connection between two double-coaxial tube arrangements is provided, since the temperature-induced deformation of their abutting axially facing flange sides is prevented.

In an example of Fig. 4, the double-coaxial tubing system 300 comprises at least two double-coaxial conduits 302a, 302b, according to the previous examples and options, and at least one fastening structure 304. The fastening structure 304 provides a clamping force by pressing adjacent primary flanges 305 of the at least two double-coaxial conduits against each other.

In an example, the material of the double-coaxial tubing system 300 comprises a specific material not prone to hydrogen embrittlement.

In an example, the material of the double-coaxial tubing system 300 comprises a specific austenitic steel not prone to hydrogen embrittlement.

In an example, the material of the two double-coaxial conduits comprises a specific austenitic steel not prone to hydrogen embrittlement.

In an example, the material of the fastening structure 304 comprises a specific austenitic steel not prone to hydrogen embrittlement.

Fig. 5 schematically shows an example of an aircraft 400 comprising a double-coaxial tubing system 406. The aircraft 400, comprises a fluid reservoir 402 storing a fluid, at least one load 404 configured for operating with the fluid and a double-coaxial tubing system 406 of the previous example. The double-coaxial tubing system 406 supplies the fluid from the fluid reservoir 402 to the at least one load.

In an example, a venting double-coaxial tubing system 406a allows venting of a cryogenic fluid from the fluid reservoir 402, as shown in Fig. 5.

In an example, the load comprises a fuel cell.

In an example, the fluid reservoir 402 comprises cryogenic hydrogen and is configured to store cryogenic hydrogen.

In an example, the fluid reservoir 402 is configured to supply cryogenic hydrogen to the double-coaxial tubing system 406.

As an advantage, the double-coaxial tubing system supports the installation of hydrogen systems on an aircraft.

As an advantage, the double-coaxial tubing system supports the installation of a hydrogen venting system on an aircraft.

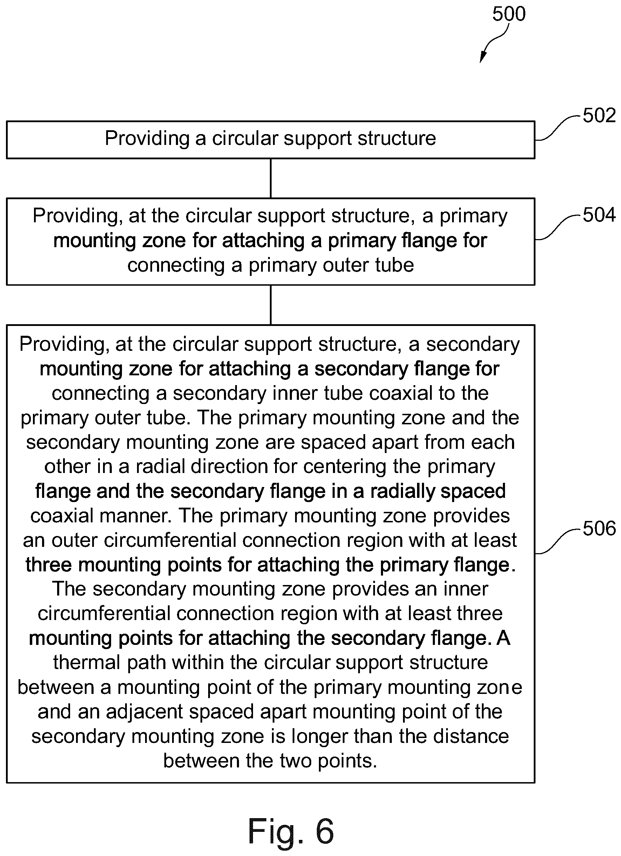

Fig. 6 shows basic steps of an example of a method 500 for providing a support 10 for coaxial flanges 12 of a double-coaxial coupling 14. The method 500 comprises the following steps:
- In a first step 502 a circular support structure 16 is provided,
- In a second step 504, at the circular support structure 16, a primary mounting zone 18 for attaching a primary flange 20 for connecting a primary outer tube 22 is provided,
- In an third step 506, at the circular support structure 16, a secondary mounting zone 24 for attaching a secondary flange 26 for connecting a secondary inner tube 28 coaxial to the primary outer tube 22 is provided. The primary mounting zone 18 and the secondary mounting zone 24 are spaced apart from each other in a radial direction for centering the primary flange 20 and the secondary flange 26 in a radially spaced coaxial manner. The primary mounting zone 18 provides an outer circumferential connection region 34 with at least three mounting points 36 for attaching the primary flange 20. The secondary mounting zone 24 provides an inner circumferential connection region 38 with at least three mounting points 40 for attaching the secondary flange 26. A thermal path within the circular support structure 16 between a mounting point 44 of the primary mounting zone 18 and an adjacent spaced apart mounting point 46 of the secondary mounting zone 24 is longer than the distance between the two points.

In an example of the method, an existing double-coaxial coupling 14 is retrofitted with the circular support structure 16.

In an example, the at least three mounting points 36, 40 are provided as welded, soldered, bonded connections between the outer circumferential connection region 34 and the inner circumferential connection region 38 and the primary and secondary flange 20, 26.

In an example, the at least three mounting points 36, 40 are interconnected to yield a single mounting point.

In an example, the at least three mounting points 36, 40 are provided by a single welded line.

In an example, the at least three mounting points 36, 40 are provided from manufacturing the circular support structure 16 with the primary and secondary flange 20, 26 from a single piece.

In an example, the at least three mounting points 36, 40 are provided from manufacturing the circular support structure 16 with the primary and secondary flange 20, 26 from a single piece from casting, CNC machining or additive manufacturing.

In an example, the at least three mounting points 36, 40 represent a material-locking connection between the circular support structure 16 with the primary and secondary flange 20, 26.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A double-coaxial tubing system (300) comprising:
- at least two double-coaxial conduits (302a, 302b); and
- at least one fastening structure (304);
wherein each of the at least two double-coaxial conduits comprises a double-coaxial conduit (200), comprising:
- a double-coaxial tube arrangement (202) with:
- a primary outer tube (204);
- a secondary inner tube (206); and
- at least one coupling (208), the coupling comprising:
- a primary flange (102);
- a secondary flange (104); and
- a support (106) for coaxial flanges (12) of a double-coaxial coupling (14), the support comprising a circular support structure (16);
wherein the circular support structure provides:
- a primary mounting zone (18) for attaching a primary flange (20) for connecting a primary outer tube (22);
- a secondary mounting zone (24) for attaching a secondary flange (26) for connecting a secondary inner tube (28) coaxial to the primary outer tube;
wherein the primary mounting zone and the secondary mounting zone are spaced apart from each other in a radial direction for centering the primary flange and the secondary flange in a radially spaced coaxial manner;
wherein the primary mounting zone provides an outer circumferential connection region (34) with at least three mounting points (36) for attaching the primary flange;
wherein the secondary mounting zone provides an inner circumferential connection region (38) with at least three mounting points (40) for attaching the secondary flange;
wherein a thermal path within the circular support structure between a mounting point (44) of the primary mounting zone and an adjacent spaced apart mounting point (46) of the secondary mounting zone is longer than the distance between the two points;
wherein the support rigidly connects the primary flange and the secondary flange and centers the secondary flange and the primary flange in a radially spaced coaxial manner;
wherein the primary flange and the secondary flange respectively are each provided with an axially facing flange side (108) for a sealingly-tight coupling connection to a respective counter part;
wherein a circumferential portion (210) of one end of the primary outer tube is sealingly attached to a primary flange (212) of the coupling;
wherein a circumferential portion (214) of one end of the secondary inner tube is sealingly attached to a secondary flange (216) of the coupling;
wherein a circular support structure (217) comprises axially oriented passages (218) between an inner side of the primary outer tube and an outer side of the secondary inner tube; and
wherein the fastening structure provides a clamping force by pressing adjacent primary flanges (305) of the at least two double-coaxial conduits against each other.

2. Double-coaxial tubing system according to claim 1, wherein the primary mounting zone is provided as a circumferential primary mounting zone (48); and
wherein the secondary mounting zone is provided as a circumferential secondary mounting zone (50).

3. Double-coaxial tubing system according to claim 1 or 2, wherein the primary mounting zone and the secondary mounting zone are provided by a plurality of at least three brackets (52), each bracket providing a mounting point of the primary mounting zone and a mounting point of the secondary mounting zone; and
wherein a circumferential connector (54) is provided which provides a common mount for the plurality of at least three brackets.

4. Double-coaxial tubing system according to claim 1, 2 or 3, wherein, for an axially oriented fluid flow, the circular support structure comprises axially oriented passages (56) between the circumferential primary mounting zone and the circumferential secondary mounting zone.

5. Double-coaxial tubing system according to one of the preceding claims, wherein the circular support structure is preloadable by a force acting between the mounting point of the primary mounting zone and the mounting point of the secondary mounting zone.

6. Double-coaxial tubing system according to one of the preceding claims, wherein the circular support structure comprises a U-shaped profile (58) in its axial cross-section;
wherein the U-shaped profile is open to the mounting point of the primary mounting zone and the mounting point of the secondary mounting zone; and
wherein the U-shaped profile provides for stiffness between the mounting point of the primary mounting zone and the mounting point of the secondary mounting zone in an axial and radial direction.

7. Double-coaxial tubing system according to one of the preceding claims, wherein legs (60) of the U-shaped profile comprise sleeve-like structures (62); and
wherein an apex (64) of the U-shaped profile comprises a ring-like structure (66).

8. Double-coaxial tubing system according to one of the preceding claims, wherein the axially facing flange side of the primary flange is provided for a sealingly-tight abutment to an axially facing flange side of a primary flange of an adjoining coupling; and
wherein the axially facing flange side of the secondary flange is provided for a sealingly-tight abutment to an axially facing flange side of a secondary flange of the adjoining coupling.

9. Double-coaxial tubing system according to one of the preceding claims, wherein the primary flange comprises at least one fastening area (110) for receiving an axially clamping force of a flange fastening structure for pressing the axially facing flange side of the primary flange to an abutting axially facing primary flange side of the adjoining coupling; and
wherein a circular support structure (111) is configured to transfer the axially clamping force to the secondary flange for pressing the axially facing flange side of the secondary flange to an abutting axially facing secondary flange side of the adjoining coupling.

10. Double-coaxial tubing system according to claim 1, wherein a second coupling (220)is provided attached to the other end of the double-coaxial tube arrangement.

11. An aircraft (400), comprising:
- a fluid reservoir (402) storing a fluid;
- at least one load (404) configured for operating with the fluid; and
- a double-coaxial tubing system (406) of at least one of the preceding claims;
wherein the double-coaxial tubing system supplies the fluid from the fluid reservoir to the at least one load.

## Patentansprüche

1. Doppelkoaxiales Rohrleitungssystem (300), umfassend:
- mindestens zwei doppelkoaxiale Rohrleitungen (302a, 302b); und
- mindestens eine Befestigungsstruktur (304);
wobei jede der mindestens zwei doppelkoaxialen Rohrleitungen eine doppelkoaxiale Rohrleitung (200) umfasst, welche aufweist:
- eine doppelkoaxiale Rohranordnung (202) mit:
- einem primären Außenrohr (204);
- einem sekundären Innenrohr (206); und
- mindestens eine Kupplung (208), wobei die Kupplung umfasst:
- einen primären Flansch (102);
- einen sekundären Flansch (104); und
- eine Halterung (106) für koaxiale Flansche (12) einer doppelkoaxialen Kupplung (14), wobei die Halterung eine kreisförmige Haltestruktur (16) umfasst;
wobei die kreisförmige Haltestruktur bereitstellt:
- eine primäre Montagezone (18) zum Anbringen eines primären Flansches (20) zum Verbinden eines primären Außenrohrs (22);
- eine sekundäre Montagezone (24) zum Anbringen eines sekundären Flansches (26) zum Verbinden eines sekundären Innenrohrs (28) koaxial zu dem primären Außenrohr;
wobei die primäre Montagezone und die sekundäre Montagezone in einer radialen Richtung voneinander beabstandet sind, um den primären Flansch und den sekundären Flansch auf eine radial beabstandete koaxiale Weise zu zentrieren;
wobei die primäre Montagezone einen äußeren Umfangskopplungsbereich (34) mit mindestens drei Montagepunkten (36) zum Anbringen des primären Flansches bereitstellt;
wobei die sekundäre Montagezone einen inneren Umfangskopplungsbereich (38) mit mindestens drei Montagepunkten (40) zum Anbringen des sekundären Flansches bereitstellt;
wobei ein Wärmepfad innerhalb der kreisförmigen Haltestruktur zwischen einem Montagepunkt (44) der primären Montagezone und einem benachbarten, beabstandeten Montagepunkt (46) der sekundären Montagezone länger als der Abstand zwischen den zwei Punkten ist;
wobei die Halterung den primären Flansch und den sekundären Flansch starr verbindet und den sekundären Flansch und den primären Flansch auf eine radial beabstandete koaxiale Weise zentriert;
wobei der primäre Flansch bzw. der sekundäre Flansch jeweils mit einer axial zugewandten Flanschseite (108) für eine abdichtend dichte Kupplungsverbindung mit einem jeweiligen Gegenstück versehen sind;
wobei ein Umfangsabschnitt (210) eines Endes des primären Außenrohrs abdichtend an einem primären Flansch (212) der Kupplung angebracht ist;
wobei ein Umfangsabschnitt (214) eines Endes des sekundären Innenrohrs abdichtend an einem sekundären Flansch (216) der Kupplung angebracht ist;
wobei eine kreisförmige Haltestruktur (217) axial ausgerichtete Durchlässe (218) zwischen einer Innenseite des primären Außenrohrs und einer Außenseite des sekundären Innenrohrs umfasst; und
wobei die Befestigungsstruktur eine Klemmkraft durch Zusammenpressen benachbarter primärer Flansche (305) der mindestens zwei doppelkoaxialen Rohrleitungen gegeneinander bereitstellt.

2. Doppelkoaxiales Rohrleitungssystem nach Anspruch 1, wobei die primäre Montagezone als eine umlaufende primäre Montagezone (48) bereitgestellt ist; und
wobei die sekundäre Montagezone als eine umlaufende sekundäre Montagezone (50) bereitgestellt ist.

3. Doppelkoaxiales Rohrleitungssystem nach Anspruch 1 oder 2, wobei die primäre Montagezone und die sekundäre Montagezone durch eine Vielzahl von mindestens drei Halterungen (52) bereitgestellt werden, wobei jede Halterung einen Montagepunkt der primären Montagezone und einen Montagepunkt der sekundären Montagezone bereitstellt; und
wobei ein Umfangsverbinder (54) bereitgestellt ist, der eine gemeinsame Halterung für die Vielzahl von mindestens drei Halterungen bereitstellt.

4. Doppelkoaxiales Rohrleitungssystem nach Anspruch 1, 2 oder 3, wobei die kreisförmige Haltestruktur für einen axial ausgerichteten Fluidstrom axial ausgerichtete Durchlässe (56) zwischen der umlaufenden primären Montagezone und der umlaufenden sekundären Montagezone umfasst.

5. Doppelkoaxiales Rohrleitungssystem nach einem der vorhergehenden Ansprüche, wobei die kreisförmige Haltestruktur durch eine Kraft vorspannbar ist, die zwischen dem Montagepunkt der primären Montagezone und dem Montagepunkt der sekundären Montagezone wirkt.

6. Doppelkoaxiales Rohrleitungssystem nach einem der vorhergehenden Ansprüche, wobei die kreisförmige Haltestruktur ein U-förmiges Profil (58) in ihrem axialen Querschnitt umfasst;
wobei das U-förmige Profil zum Montagepunkt der primären Montagezone und zum Montagepunkt der sekundären Montagezone hin offen ist; und
wobei das U-förmige Profil für Steifigkeit zwischen dem Montagepunkt der primären Montagezone und dem Montagepunkt der sekundären Montagezone in einer axialen und radialen Richtung sorgt.

7. Doppelkoaxiales Rohrleitungssystem nach einem der vorhergehenden Ansprüche, wobei Schenkel (60) des U-förmigen Profils hülsenartige Strukturen (62) umfassen; und
wobei ein Scheitel (64) des U-förmigen Profils eine ringartige Struktur (66) umfasst.

8. Doppelkoaxiales Rohrleitungssystem nach einem der vorhergehenden Ansprüche, wobei die axial zugewandte Flanschseite des primären Flansches für ein abdichtend dichtes Anliegen an einer axial zugewandten Flanschseite eines primären Flansches einer angrenzenden Kupplung vorgesehen ist; und
wobei die axial zugewandte Flanschseite des sekundären Flansches für ein abdichtend dichtes Anliegen an einer axial zugewandten Flanschseite eines sekundären Flansches der angrenzenden Kupplung vorgesehen ist.

9. Doppelkoaxiales Rohrleitungssystem nach einem der vorhergehenden Ansprüche, wobei der primäre Flansch mindestens einen Befestigungsbereich (110) zur Aufnahme einer axialen Klemmkraft einer Flanschbefestigungsstruktur umfasst, um die axial zugewandte Flanschseite des primären Flansches an eine anliegende, axial zugewandte primäre Flanschseite der angrenzenden Kupplung zu pressen; und
wobei eine kreisförmige Haltestruktur (111) dazu eingerichtet ist, die axiale Klemmkraft auf den sekundären Flansch zu übertragen, um die axial zugewandte Flanschseite des sekundären Flansches an eine anliegende, axial zugewandte sekundäre Flanschseite der angrenzenden Kupplung zu pressen.

10. Doppelkoaxiales Rohrleitungssystem nach Anspruch 1, wobei eine zweite Kupplung (220) bereitgestellt ist, die an dem anderen Ende der doppelkoaxialen Rohranordnung angebracht ist.

11. Luftfahrzeug (400), umfassend:
- einen Fluidbehälter (402), der ein Fluid speichert;
- mindestens einen Verbraucher (404), der dafür eingerichtet ist, mit dem Fluid zu arbeiten; und
- ein doppelkoaxiales Rohrleitungssystem (406) nach mindestens einem der vorhergehenden Ansprüche;
wobei das doppelkoaxiale Rohrleitungssystem das Fluid aus dem Fluidbehälter zu dem mindestens einen Verbraucher führt.

## Revendications

1. Système de tuyauterie doublement coaxiale (300) comprenant:
- au moins deux conduits doublement coaxiaux (302a, 302b); et
- au moins une structure de fixation (304);
dans lequel chacun des au moins deux conduits doublement coaxiaux comprend un conduit doublement coaxial (200), comprenant:
- un agencement de tubes doublement coaxiaux (202) avec:
- un tube extérieur primaire (204);
- un tube intérieur secondaire (206); et
- au moins un raccord (208), le raccord comprenant:
- une bride primaire (102);
- une bride secondaire (104); et
- un support (106) pour brides coaxiales (12) d'un raccord doublement coaxial (14), le support comprenant une structure de support circulaire (16);
dans lequel la structure de support circulaire fournit:
- une zone de montage primaire (18) pour fixer une bride primaire (20) destinée à raccorder un tube extérieur primaire (22);
- une zone de montage secondaire (24) pour fixer une bride secondaire (26) destinée à raccorder un tube intérieur secondaire (28) coaxial au tube extérieur primaire;
dans lequel la zone de montage primaire et la zone de montage secondaire sont espacées l'une de l'autre dans une direction radiale pour centrer la bride primaire et la bride secondaire d'une manière coaxiale radialement espacée;
dans lequel la zone de montage primaire fournit une région de raccordement circonférentielle extérieure (34) avec au moins trois points de montage (36) pour fixer la bride primaire;
dans lequel la zone de montage secondaire fournit une région de raccordement circonférentielle intérieure (38) avec au moins trois points de montage (40) pour fixer la bride secondaire;
dans lequel un chemin thermique à l'intérieur de la structure de support circulaire entre un point de montage (44) de la zone de montage primaire et un point de montage (46) adjacent et espacé de la zone de montage secondaire est plus long que la distance entre les deux points;
dans lequel le support relie rigidement la bride primaire et la bride secondaire et centre la bride secondaire et la bride primaire d'une manière coaxiale radialement espacée;
dans lequel la bride primaire et la bride secondaire sont chacune pourvues d'une face de bride orientée axialement (108) pour une liaison d'accouplement étanche avec une pièce complémentaire respective;
dans lequel une partie circonférentielle (210) d'une extrémité du tube extérieur primaire est fixée de manière étanche à une bride primaire (212) du raccord;
dans lequel une partie circonférentielle (214) d'une extrémité du tube intérieur secondaire est fixée de manière étanche à une bride secondaire (216) du raccord;
dans lequel une structure de support circulaire (217) comprend des passages orientés axialement (218) entre un côté intérieur du tube extérieur primaire et un côté extérieur du tube intérieur secondaire; et
dans lequel la structure de fixation fournit une force de serrage en pressant des brides primaires adjacentes (305) des au moins deux conduits doublement coaxiaux l'une contre l'autre.

2. Système de tuyauterie doublement coaxiale selon la revendication 1, dans lequel la zone de montage primaire est prévue sous la forme d'une zone de montage primaire circonférentielle (48); et
dans lequel la zone de montage secondaire est prévue sous la forme d'une zone de montage secondaire circonférentielle (50).

3. Système de tuyauterie doublement coaxiale selon la revendication 1 ou 2, dans lequel la zone de montage primaire et la zone de montage secondaire sont fournies par une pluralité d'au moins trois étriers (52), chaque étrier fournissant un point de montage de la zone de montage primaire et un point de montage de la zone de montage secondaire; et
dans lequel un élément de raccordement circonférentiel (54) est prévu, lequel fournit un support commun pour la pluralité d'au moins trois étriers.

4. Système de tuyauterie doublement coaxiale selon la revendication 1, 2 ou 3, dans lequel, pour un écoulement de fluide orienté axialement, la structure de support circulaire comprend des passages orientés axialement (56) entre la zone de montage primaire circonférentielle et la zone de montage secondaire circonférentielle.

5. Système de tuyauterie doublement coaxiale selon l'une des revendications précédentes, dans lequel la structure de support circulaire peut être préchargée par une force agissant entre le point de montage de la zone de montage primaire et le point de montage de la zone de montage secondaire.

6. Système de tuyauterie doublement coaxiale selon l'une des revendications précédentes, dans lequel la structure de support circulaire comprend un profilé en U (58) dans sa section transversale axiale;
dans lequel le profilé en U est ouvert vers le point de montage de la zone de montage primaire et le point de montage de la zone de montage secondaire; et
dans lequel le profilé en U fournit une rigidité entre le point de montage de la zone de montage primaire et le point de montage de la zone de montage secondaire dans une direction axiale et radiale.

7. Système de tuyauterie doublement coaxiale selon l'une des revendications précédentes, dans lequel des branches (60) du profilé en U comprennent des structures en forme de manchon (62); et
dans lequel un sommet (64) du profilé en U comprend une structure en forme d'anneau (66).

8. Système de tuyauterie doublement coaxiale selon l'une des revendications précédentes, dans lequel la face de bride orientée axialement de la bride primaire est prévue pour venir en appui étanche contre une face de bride orientée axialement d'une bride primaire d'un raccord contigu; et
dans lequel la face de bride orientée axialement de la bride secondaire est prévue pour venir en appui étanche contre une face de bride orientée axialement d'une bride secondaire du raccord contigu.

9. Système de tuyauterie doublement coaxiale selon l'une des revendications précédentes, dans lequel la bride primaire comprend au moins une zone de fixation (110) pour recevoir une force de serrage axiale d'une structure de fixation de bride pour presser la face de bride orientée axialement de la bride primaire contre une face de bride primaire contiguë orientée axialement du raccord contigu; et
dans lequel une structure de support circulaire (111) est configurée pour transférer la force de serrage axiale à la bride secondaire pour presser la face de bride orientée axialement de la bride secondaire contre une face de bride secondaire contiguë orientée axialement du raccord contigu.

10. Système de tuyauterie doublement coaxiale selon la revendication 1, dans lequel un second raccord (220) est prévu fixé à l'autre extrémité de l'agencement de tubes doublement coaxiaux.

11. Aéronef (400), comprenant:
- un réservoir de fluide (402) stockant un fluide;
- au moins un équipement consommateur (404) configuré pour fonctionner avec le fluide; et
- un système de tuyauterie doublement coaxiale (406) selon au moins l'une des revendications précédentes;
dans lequel le système de tuyauterie doublement coaxiale achemine le fluide depuis le réservoir de fluide vers l'au moins un équipement consommateur.
